(19) Europäisches Patentamt
European Patent Office
Office européen des brevets

(11) **EP 3 919 863 A1**

(12) **EUROPEAN PATENT APPLICATION**
published in accordance with Art. 153(4) EPC

(43) Date of publication:
**08.12.2021 Bulletin 2021/49**

(51) Int Cl.:
***G01C 21/20*** *(2006.01)*

(21) Application number: **19913780.3**

(22) Date of filing: **27.08.2019**

(86) International application number:
**PCT/CN2019/102686**

(87) International publication number:
**WO 2020/155615 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2019 CN 201910109823**

(71) Applicant: **Qfeeltech (Beijing) Co., Ltd.**
**Beijing 100191 (CN)**

(72) Inventors:
• **LI, Shuailing**
**Beijing 100191 (CN)**
• **CHI, Ming**
**Beijing 100191 (CN)**
• **ZHANG, Yiming**
**Beijing 100191 (CN)**
• **CHEN, Zhen**
**Beijing 100191 (CN)**

(74) Representative: **Vigand, Philippe et al**
**Novagraaf International SA**
**Chemin de l'Echo 3**
**1213 Onex - Genève (CH)**

(54) **VSLAM METHOD, CONTROLLER, AND MOBILE DEVICE**

(57) A VSLAM method, a controller and a mobile device. The VSLAM method includes: receiving an image transmitted by a vision sensor (12) (S301); retrieving a key frame in a pre-established key frame database, and, after retrieving the key frame, matching the image and the retrieved key frame (S302); computing relevant information of a visual relative pose based on the image and the key frame that have been successfully matched, wherein, the relevant information of the visual relative pose includes a visual relative pose. The visual relative pose is computed based on two-dimensional coordinates of matching feature points of the image and the key frame that are successfully matched (S303); if the relevant information of the visual relative pose is obtained, updating an absolute pose and a map based on the relevant information of the visual relative pose and relevant information of a dead reckoning based relative pose (S304). The method can increase the successful rate of computing the visual relative pose, thereby increasing the accuracy and computing speed during localization and mapping.

FIG. 3

Printed by Jouve, 75001 PARIS (FR)

**Description**

**TECHNICAL FIELD**

The present invention relates to the technology field of mobile devices and, more particularly, to a VSLAM method, a controller and a mobile device.

**BACKGROUND TECHNOLOGY**

Mobile devices are robotic devices that operate autonomously or semi-autonomously, which can be implemented in various scenes. A mobile device obtains environmental information through multiple sensors, and reacts correspondingly in response to the environmental information, such that the mobile device can accomplish predetermined tasks safely, reliably, highly efficiently, and intelligently.

Simultaneous Localization and Mapping ("SLAM') means the mobile device starts moving from an unknown location in an unknown environment, and performs self localization during the movement based on its own pose and a map. In the meantime, the mobile device builds or constructs an incremental map based on the self localization, thereby realizing the autonomous localization and navigation of the mobile device.

Visual SLAM ("VSLAM") means a mobile device realizes autonomous localization and mapping using a visual system, which has advantages of low cost and strong adaptability. In a VSLAM system, visual images and dead reckoning methods are combined to perform localization and mapping for the mobile device.

In the currently available VSLAM related technologies, typically computation is performed based on vision to obtain a visual relative pose. When computing the visual relative pose, first, in general, feature points of the current image are matched with feature points of pre-established landmarks. Then the visual relative pose is obtained from computation based on three-dimensional coordinates of the feature points of a matching landmark. The three-dimensional coordinates of a feature point generally refer to three-dimensional coordinates of a spatial point corresponding to the feature point in a camera coordinate system. The three-dimensional coordinates in the camera coordinate system may be converted to those in a global coordinate system. If the three-dimensional coordinates of the feature point are coordinates in the global coordinate system, and if the origin of the global coordinate system is selected to be an initial location point of the mobile device in the global coordinate system, then the visual relative pose is the same as a visual absolute pose.

The three-dimensional coordinates of the spatial point corresponding to the feature point are generally obtained by computation based on two selected frames of images. The two frames of images involved in the computation need to satisfy certain conditions in order for the three-dimensional coordinates of the spatial point to be computed. For example, there need to be a sufficient number of feature points included in the two frames of images that can be matched with one another, a distance between the two frames of images in the space need to be within a predetermined range, etc. In some scenes, for example, when an image acquisition period is relatively long, or when changes in adjacent images are relatively large, the computation of the three-dimensional coordinates of the feature point tends to fail, resulting in a reduction in the success rate of landmark creation, and a reduction in the number of landmarks that can be used for matching in the database. The subsequent VSLAM computation result is not sufficiently accurate, which affects the ultimate result of localization and mapping.

**CONTENT OF INVENTION**

To overcome the existing issues in the related technology at least to a certain extent, the present invention provides a VSLAM method, a controller and a mobile device.

In accordance with a first aspect of embodiments of the present invention, a VSLAM method is provided, including:

receiving an image transmitted by a visual sensor;
retrieving a key frame from a pre-established key frame database, and, after the key frame is retrieved, matching the image with the retrieved key frame;
computing relevant information of a visual relative pose based on the image and the key frame that have been successfully matched, wherein, the relevant information of the visual relative pose includes a visual relative pose, the visual relative pose is computed based on two-dimensional coordinates of matching feature points between the image and the key frame that have been successfully matched;
if the relevant information of the visual relative pose is obtained, then updating an absolute pose and a map of a mobile device based on the relevant information of the visual relative pose and relevant information of a dead reckoning based relative pose.

Optionally, the key frame includes: an absolute pose, the absolute pose is a pose of the mobile device in a global coordinate system when capturing an image on which the key frame is based, the map includes an absolute pose of at least one node, the method further includes:
updating an absolute pose included in the key frame corresponding to a node based on an absolute pose of the node in the updated map.

Optionally, computing the relevant information of the visual relative pose based on the image and the key frame that have been successfully matched, includes:

sorting key frames that have been successfully matched;
orderly selecting a key frame that has been successfully matched as a candidate frame;
computing the visual relative pose based on the two-dimensional coordinates of a feature point of the image and the two-dimensional coordinates of a feature point of the candidate frame, and based on Epipolar geometry principles;
determining whether the visual relative pose is reasonable based on a predetermined reasonableness condition;
repeating selection of the candidate frame and subsequent computation, until a cycle is terminated, terminating the cycle includes: a number of reasonable visual relative poses reaches a predetermined threshold number, or, all key frames that have been successfully matched have been selected;
after the cycle is terminated, if there exists a reasonable visual relative pose, adding the reasonable visual relative pose and its relevant information to a pre-processing result, the relevant information includes: a covariance matrix and two associated node identifications.

Optionally, the method also includes:

when a predetermined creation condition is satisfied, extracting a feature point from the image, obtaining the two-dimensional coordinates and a descriptor of the feature point;
when a number of extracted feature points is greater than or equal to a predetermined extraction threshold value, creating a new key frame, and storing the new key frame in the key frame database, the new key frame includes: the two-dimensional coordinates and the descriptors of the feature points.

Optionally, the key frame also includes: an absolute pose, the absolute pose is a pose of the mobile device in a global coordinate system when capturing an image on which the key frame is based, the method further includes:
computing an absolute pose corresponding to the image based on an absolute pose corresponding to a preceding image or key frame and the dead reckoning based relative pose corresponding to a corresponding time interval.

Optionally, the method also includes:

receiving an original pose transmitted by a dead reckoning sensor; or, receiving motion data transmitted by the dead reckoning sensor, and computing the original pose based on the motion data;
computing the relevant information of the dead reckoning based relative pose based on the original pose.

Optionally, updating the absolute pose and the map of the mobile device based on the relevant information of the visual relative pose and the relevant information of the dead reckoning based relative pose, includes:

creating a current node after obtaining the relevant information of the visual relative pose;
determining an odometer edge based on the relevant information of the dead reckoning based relative pose, and connecting the current node to an existing, last created node through the odometer edge;
when there exists a key frame node associated with the current node in existing nodes, determining a visual edge based on the relevant information of the visual relative pose, connecting the current node to the associated key frame node through the visual edge; and, performing a graph optimization on the nodes and edges, to obtain an updated absolute pose and an updated map of the mobile device.

Optionally, the method also includes:
if the relevant information of the visual relative pose cannot be obtained, updating the absolute pose of the mobile device at a most recent time instance based on the relevant information of the dead reckoning based relative pose.

Optionally, the two-dimensional coordinates are two-dimensional coordinates of the feature point in the pixel coordinate system.

In accordance with a second aspect of the embodiments of the present invention, a controller is provided, including:

a processor; and, a memory configured to store instructions executable by the processor;

wherein, when the instructions in the memory are executed by the processor, a method described by any item of the first aspect of the embodiments of the present invention is executed.

In accordance with a third aspect of embodiments of the present invention, a mobile device is provided, including:

a dead reckoning sensor, configured to provide an original pose or motion data, to directly obtain the original pose or compute the original pose based on the motion data;
a visual sensor, configured to acquire an image; and
a controller, connected with the dead reckoning sensor and the visual sensor, to perform any of the disclosed methods.

In accordance with a fourth aspect of embodiments of the present invention, a non-transitory computer-readable storage medium is provided, when instructions in the storage medium are executed by the controller of the mobile device, a method described by any item of the first aspect of the embodiments of the present invention is executed.

In accordance with a fifth aspect of embodiments of the present invention, a VSLAM device is provided, including:

a first receiving module, configured to receive an image transmitted by a visual sensor;
a matching module, configured to retrieve a key frame from a pre-established key frame database, and, after retrieving the key frame, match the image with the retrieved key frame;
a first computation module, configured to compute relevant information of a visual relative pose based on the image and the key frame that have been successfully matched, wherein, the relevant information of the visual relative pose includes a visual relative pose, the visual relative pose is computed based on two-dimensional coordinates of matching feature points between the image and the key frame that have been successfully matched;
a first updating module, configured to update an absolute pose and a map of the mobile device based on a result of the relevant information of the visual relative pose and the relevant information of the dead reckoning based relative pose, when the relevant information of the visual relative pose is obtained.

Optionally, the key frame includes: an absolute pose, the absolute pose is a pose of the mobile device in a global coordinate system when acquiring an image on which the key frame is based, the map includes an absolute pose of at least one node, the device also includes:

a second updating module, configured to update an absolute pose in the key frame corresponding to a node based on an absolute pose of the node in the updated map.

Optionally, the first computation module is specifically configured to:

sort key frames that have been successfully matched;
orderly select a key frame that has been successfully matched as a candidate frame;
compute the visual relative pose based on two-dimensional coordinates of a feature point of the image and two-dimensional coordinates of a feature point of the candidate frame and based on Epipolar geometry principle;
determine whether the visual relative pose is reasonable based on a predetermined reasonableness condition;
repeat the selection of the candidate frame and subsequent computations, until a cycle is terminated. Terminating the cycle includes: a number of reasonable visual relative poses reaches a predetermined threshold number, or, all of the key frames that have been successfully matched have been selected;
after the cycle is terminate, if there is a reasonable visual relative pose, adding the reasonable visual relative pose and relevant information of the reasonable visual relative pose to a pre-processing result, wherein the relevant information of the reasonable visual relative pose includes: a covariance matrix and two associated node identifications.

Optionally, the device also includes:
a creation module, configured to extract a feature point from the image and obtain two-dimensional coordinates and a descriptor of the feature point, when a predetermined creation condition is satisfied; create a new key frame when a number of extracted feature points is greater than or equal to a predetermined extraction threshold value, and store the new key frame into the key frame database, wherein the new key frame includes: the two-dimensional coordinates or descriptors of the feature points.

Optionally, the key frame also includes: an absolute pose, wherein the absolute pose is a pose of the mobile device in a global coordinate system when acquiring an image on which the key frame is based. The device also includes:
an acquisition module, configured to compute an absolute pose corresponding to the image based on an absolute pose corresponding to a preceding image or key frame and a dead reckoning based relative pose corresponding to a related time interval.

Optionally, the device also includes:

a second receiving module, configured to receive an original pose transmitted by the dead reckoning sensor; or, to receive motion data transmitted by the dead reckoning sensor, and compute the original pose based on the motion data;

a second computation module, configured to compute the relevant information of the dead reckoning based relative pose based on the original pose.

Optionally, the first updating module is specifically configured to:

create a current node after the relevant information of the visual relative pose is obtained;

determine an odometer edge based on the relevant information of the dead reckoning based relative pose, and connect the current node to an existing, last created node through the odometer edge;

when there is a key frame node associated with the current node in the existing nodes, determine a visual edge based on the relevant information of the visual relative pose, and connect the current node to the associated key frame node through the visual edge; and, perform a graph optimization on the nodes and edges to obtain an updated absolute pose and an updated map of the mobile device.

Optionally, the device also includes:

a third updating module, configured to update an absolute pose of the mobile device at the most recent time instance based on the relevant information of the dead reckoning based relative pose when the relevant information of the visual relative pose cannot be obtained.

Optionally, the two-dimensional coordinates are two-dimensional coordinates of the feature point in the pixel coordinate system.

The technical solutions provided by the present invention have the following advantages:

when computing the visual relative pose, by adopting two-dimensional coordinates of feature points that match with one another, rather than three-dimensional coordinates of spatial points corresponding to the feature points, various restriction issues associated with the computation of the three-dimensional coordinates can be avoided, thereby increasing the success rate of computing the visual relative pose, and improving the accuracy of the ultimate result of localization and mapping and computation speed.

It should be understood that the above general descriptions and the following detailed descriptions are only illustrative and explanatory, and are not intended to limit the scope of the present invention.

## BRIEF DESCRIPTION OF THE DRAWINGS

The accompanying drawings are incorporated into the specification, form parts of the specification, illustrate embodiments of the present invention, and explain, together with the specification, the principle of the present invention.

FIG. 1 is a schematic diagram of a structural configuration of a VSLAM system, according to an example embodiment.
FIG. 2 is a schematic diagram of a structural configuration of a controller, according to an example embodiment.
FIG. 3 is a flow chart illustrating a VSLAM method, according to an example embodiment.
FIG. 4 is a flow chart illustrating processes of data pre-processing, according to an example embodiment.
FIG. 5 is a flow chart illustrating processes of computing a visual relative pose, according to an example embodiment.
FIG. 6 is a schematic illustration of an absolute pose of a mobile device, according to an example embodiment.
FIG. 7 is a flow chart illustrating processes for creating a key frame, according to an example embodiment.
FIG. 8 is a flow chart illustrating processes for data fusion, according to an example embodiment.
FIG. 9 is a schematic diagram of a structural configuration of a controller, according to an example embodiment.
FIG. 10 is a schematic diagram of a structural configuration of a VSLAM device, according to an example embodiment.

## DETAILED DESCRIPTION OF THE EMBODIMENTS

The embodiments of the present invention will be described in detail below. Examples of the embodiments are shown in the accompanying drawings. When the following descriptions refer to the drawings, unless otherwise indicated, the same numbers refer to the same or similar elements. The implementation methods described below in the illustrative embodiments do not represent all of the implementation methods consistent with the present invention. Conversely, they are merely some examples of the device and method that are consistent with some aspects of the present invention as described in detail in the claims.

A mobile device of at least one of the embodiments of the present invention may be, for example, a cleaning robot, an accompany type movable robot, a service type movable robot, an industrial inspection smart device, a security robot, a driverless vehicle, an unmanned aerial vehicle, etc. The cleaning robot may be, for example, a smart floor sweeping machine, a smart floor mopping machine, a window cleaning robot. An accompany type movable robot may be, for example, a smart electronic pet, a nanny robot. A service type movable robot may be, for example, a receptionist robot for a restaurant, a hotel, a meeting place. An industrial inspection smart device may include, for example, a power line inspection robot, a smart forklift. A security robot may be, for example, a home or commercial use smart guard robot.

Sensors frequently used in a mobile device include:

(1) Wheel encoder, which is a digital encoder configured to measure an angular displacement. The wheel encoder has the advantages of a strong resolving capability, a high measurement precision, and reliable operations, etc. The wheel encoder is one of the most frequently used displacement sensors for measuring a position of an axial rotation angle. When combined with the known size of the wheels, the wheel encoder may be used for localization and/or measuring the velocity of the mobile device.

(2) Inertial measurement unit (IMU), which includes a gyroscope and/or an accelerometer. The gyroscope is a device configured to measure an angular movement of the mobile device. It may measure the angular velocity of the mobile device. An angle of the mobile device may be obtained from an integration of the angular velocity. A pose of the mobile device in a three-dimensional space may be computed using a three-axis gyroscope. The accelerometer is a device configured to measure an acceleration of the mobile device. It can measure the acceleration of the mobile device. A velocity may be obtained from an integration of the acceleration. A displacement may be obtained from an integration of the velocity.

(3) Camera, which is a device configured to perceive the surrounding environment. It has a low cost, and can provide abundant information for localization, mapping, recognizing a target/obstacle, etc. Cameras include monocular cameras, binocular cameras, multiocular cameras. A monocular camera may not provide a reference scale. Therefore, in practice, the monocular camera may be operated in combination with other sensors. A binocular camera and a multiocular camera can each provide the scale of the space.

Other sensors may include a Global Position System (GPS), a 2D/3D laser distance measurement sensor, an ultrasonic distance measurement sensor, etc. The above-described wheel encoder and IMU all belong to dead reckoning sensors.

VSLAM typically includes: feature extraction, image matching, data fusion, etc.

Feature extraction can extract and obtain image features. Frequently used image features include point features and line features. Here, point features are primarily introduced. There are various methods for extracting the point features, including Harris, FAST, ORB, SIFT, SURT, etc., and point feature extraction methods based on deep learning. In this description, ORB is used as an example. ORB uses a FAST algorithm to detect feature points. This method is based on image grayscale values of regions surrounding the feature points, and detects pixel values in regions surrounding a candidate feature point for a complete circle. If the regions surrounding the candidate feature point include a sufficient number of pixel points having a sufficiently large difference in grayscale value as compared with the candidate feature point, then the candidate feature point is treated as a feature point, as follows:

$$N = \sum_{x \forall (circle(p))} \left| I(x) - I(p) \right| > \varepsilon_d$$

Here, I(x) represents a grayscale value of any pixel point on a circumference defined with the candidate feature point as a circle center, and a radius of a predetermined value. $I(p)$ represents the circle center, i.e., the grayscale value of the candidate feature point. $\varepsilon_d$ represents a predetermined threshold value for the difference in the grayscale value. If N is greater than a given predetermined threshold value, then p is regarded as a feature point. N is in general three quarters (3/4) of a total number of I(x).

To obtain faster results, an additional acceleration method is also used. If 4 pixel points surrounding the candidate feature point at every 90-degree angle have been measured, there should be at least 3 pixel points having a sufficiently large difference in grayscale value as compared with the candidate feature point; otherwise, there is no need to compute other pixel points, and the candidate feature point can be directly regarded as not being a feature point. A selected radius of a circle surrounding the candidate feature point is an important parameter. For simplicity and efficiency, the radius is 3, and there are 16 surrounding pixel points in total that need to be compared. To increase the comparison efficiency, typically only K surrounding pixel points are used for comparison, i.e., the FAST-K method. After a feature point is obtained, the properties of the feature point need to be described in a certain manner. The output of these properties is referred to as a descriptor of the feature point. ORB adopts a BRIEF algorithm to compute the descriptor of the feature point.

The core concept of the BRIEF algorithm is to select N point pairs surrounding the feature point P based on a predetermined mode, and combine the comparison results of the N point pairs as the descriptor. Steps:

1). Drawing a circle O using a key point P as the circle center, and d as the radius.

2). Selecting N point pairs in the circle O based on a predetermined mode. For the convenience of description, here N=4. In practical applications, N may be 512. It is assumed that the 4 point pairs currently selected are labeled respectively as:

$P_1(A, B)$, $P_2(A, B)$, $P_3(A, B)$, $P_4(A, B)$

3). Defining an operation T as:

$$T(P(A,B)) = \begin{cases} 1 & I_A > I_B \\ 0 & I_A \leq I_B \end{cases}$$

wherein, $I_A$ represents the grayscale value of point A, and $I_B$ represents the grayscale value of point B.

4). Performing the operation T on the selected points respectively, and combining obtained results to arrive at the ultimate descriptor. If:

$$T\left(P_1(A,B)\right) = 1$$

$$T\left(P_2(A,B)\right) = 0$$

$$T\left(P_3(A,B)\right) = 1$$

$$T\left(P_4(A,B)\right) = 1$$

then the ultimate descriptor is: 1011.

To maintain the rotation invariance of the feature point, a facing direction is added for the feature point. Using the feature point P as the circle center, R as the radius, a grayscale center of mass of the region is C, PC is the facing direction of the feature point. As shown below:

$$\theta = a\tan2(M_{01}, M_{10})$$

$$M_{01} = \sum_{x=-R}^{R} \sum_{y=-R}^{R} yI(x,y)$$

$$M_{10} = \sum_{x=-R}^{R} \sum_{y=-R}^{R} xI(x,y)$$

wherein, $\theta$ represents the facing direction of the feature point, $I(x, y)$ represents the grayscale value of the pixel point having coordinates $(x0 + x, y0 + y)$, $(x0, y0)$ represent the coordinates of the feature point, $x$ and $y$ represent the offset of the coordinates.

Given a current image, to inquire for an image similar to the current image in an existing database, the most straightforward method is to traverse the entire database to perform comparisons. However, this has a low efficiency. Currently, the most favorite is the Bag of Words (BoW) method. The BoW method primarily includes the following steps:

(1). Feature extraction

Assuming there are N images, and the i-th image is composed of n(i) feature points, i.e., is represented by n(i) feature vectors, then a total number sum(n(i)) of feature vectors (i.e., words) may be obtained. In general, a feature vector is represented by a descriptor of the feature point, or, after the descriptor is normalized based on the facing direction, represented by the normalized descriptor. The feature vector may be customized and designed based on the feature problem. Frequently used features include Color histogram, SIFT, LBP, etc.

(2). Dictionary/Codebook generation

Clustering (using, e.g., K-means clustering method etc.) is performed for the feature vectors obtained in the above step to obtain K clustering centers, and the codebook is constructed based on the clustering centers.

(3). Generation of histogram based on the codebook

For each image, a computation based on a k-NN (nearest neighbor) algorithm is performed to determine "which cluster" of words in the codebook each "word" of the image belongs to, thereby obtaining the BoW representation of the image corresponding to the codebook.
Currently, the model that is actually widely used in practical applications, such as a search engine, is the tf-idf model. The primary principle of the tf-idf model is: if a word w appears in a frame of image d at a high frequency and rarely appears in other images, then the word w is regarded as having a high distinguishing capability, and is suitable for distinguishing the image d from other images. The model primarily includes two factors:

1) the Term Frequency tf of the word w in the image d, i.e., a ratio between the count *(w,* d) of the word w appearing in the image *d* and the total number of words in the image *d,* size (*d*):

$$\mathrm{tf}\,(w, d) = \mathrm{count}\,(w, d) \,/\, \mathrm{size}\,(d).$$

2) the Inverse Document Frequency (idf) of the word w in the entire set of images, i.e., the logarithm of the ratio between the total number n of images and the number of images docs *(w,* D) in which the word w appears:

$$\mathrm{idf} = \log\,(n \,/\, \mathrm{docs}\,(w, D))$$

The tf-idf model computes a weight for each image *d* and an inquiry sequence *q* formed by keywords w[1] ... w[k] based on tf and idf, for representing a degree of matching between the inquiry sequence *q* and the image *d:*

$$\mathrm{tf\text{-}idf}(q, d)$$

$$= \mathrm{sum}\,\{\,\mathrm{i} = 1..k \mid \mathrm{tf\text{-}idf}(w[\mathrm{i}], d)\,\}$$

$$= \mathrm{sum}\,\{\,\mathrm{i} = 1..k \mid \mathrm{tf}(w[\mathrm{i}], d) * \mathrm{idf}(w[\mathrm{i}])\,\}\,.$$

After a pair of images is selected, corresponding feature points are matched with one another on a one to one basis. The entire image may be traversed in the one to one comparison. A k-d tree may be adopted to accelerate. If a potential pose relationship can be obtained, the comparison may be accelerated based on Epipolar geometry principles. In addition, deep learning may be adopted to search for and match the images.
The currently available data fusion methods are roughly divided into two classes: filtering based methods and non-linear optimization based methods. The most classic filtering based method is the Kalman filter. The process function and the observation function used in the Kalman filter can be expressed as, respectively:

$$X\_k = AX\_k{-}1 + Bu\_k + w\_k{-}1$$

$$Z\_k = HX\_k + v\_k$$

wherein, X_k represents a state vector of the system, A, B represent parameters of the process function, u_k represents an input of the system, w_k-1 represents process noise, Z_k represents an observation vector, H represents the parameter of the observation function, v_k represents observation noise.
The first equation indicates that each X_k may be represented by a linear random function. Any state vector X_k is a linear combination of a state vector of a previous state, an input u_k, and the process noise w_k-1.

The second equation indicates that each observation vector is a linear combination of a current state vector and the observation noise. By default, this value generally follows a Gaussian distribution.

The process noise and the observation noise in these two equations are generally regarded as statistically independent. According to the Kalman filter, a current state vector may be predicted based on a state vector of a previous time instance of the system and a current input, as shown below:

$$\hat{x}_k^- = A\hat{x}_{k-1} + Bu_k$$

$$P_k^- = AP_{k-1}A^T + Q$$

wherein, $\hat{x}_{k-1}$ represents an estimate of the state vector at time instance $k - 1$, $u_k$ represents the input at time instance $k$, $x_k^-$ represents a predicted value of the state vector at time instance $k$, $P_k^-$ represents the predicted value of the covariance matrix of the state vector at time instance $k$, $P_{k-1}$ represents the covariance matrix of the state vector at time instance $k - 1$, $Q$ represents the covariance of the process noise, $A$, $B$ represent parameters of the process function.

When the observation vector of the system is obtained, an estimate of the current state vector may be obtained based on the current observation vector and the prediction of the current state vector, as shown below:

$$K_k = P_k^- H^T (H P_k^- H^T + R)^{-1}$$

$$\hat{x}_k = \hat{x}_k^- + K_k(z_k - H\hat{x}_k^-)$$

$$P_k = (I - K_k H)P_k^-$$

wherein, $K_k$ represents the Kalman gain, $R$ represents the covariance of the observation noise, $z_k$ represents an observation vector at time instance $k$, $H$ represents the parameter of the observation function.

In practice, there are various other methods that are improvements based on the Kalman filter, such as the extended Kalman filter, unscented Kalman filter, iterative Kalman filter, multi-state Kalman filter, etc. In addition, there are particle filters, etc.

A filtering method is based on recursion, and a non-linear optimization method is based on iteration. Next, the non-linear optimization method is introduced.

If the minimum value of a given target function $\|f(x)\|_2^2$ is sought, then: a Taylor expansion of the target function may be carried out around $x$ :

$$\|f(x + \Delta x)\|_2^2 \approx \|f(x)\|_2^2 + J(x)\Delta x + \frac{1}{2}\Delta x^T H \Delta x$$

Here $J(x)$ represents a derivative of $\|f(x)\|_2^2$ with respect to $x$ (Jacobian matrix), H represents the second order derivative (Hessian matrix). The first order item or the second order item of the Taylor expansion may be selectively reserved, and the corresponding solving method is the first order gradient method or the second order gradient method. If the first order gradient is reserved, then the solution for the increment may be:

$$\Delta x = -J^T(x).$$

Its intuitive meaning is simple, i.e., as long as the forward moving is in an inverse gradient direction. Typically, a step size may be calculated in that direction, and the fastest descending manner may be obtained. This method may be referred to as the steepest descent method.

On the other hand, if the second order gradient information is reserved, the solution for the increment may be:

$$H \Delta x = - J^{T}(x).$$

This method may be referred to as the Newton's method. In addition, there are Gauss-Newton method, Levenberg-Marquadt method, etc. In specific implementations, optimization using a sliding window method or an incremental optimization (iSAM) may be adopted.

For better understanding of the present invention, some terminologies used in the present invention are explained as follows:

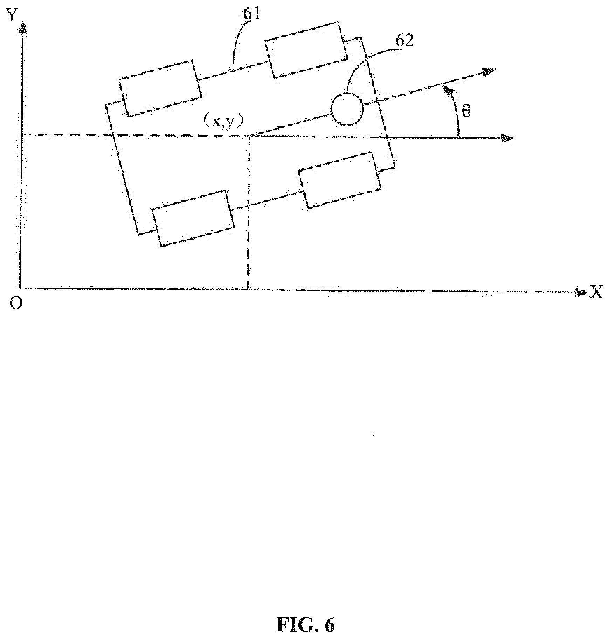

Key frame: stored in a key frame database, each key frame is created based on an image acquired by the visual sensor. Unless specifically noted, the visual sensor is disposed on the mobile device. The visual sensor may be included in a picture camera, a video camera, or a camera lens. Each key frame includes one of the following groups of data: an absolute pose of the mobile device in the global coordinate system when acquiring the image on which the key frame is based, the two-dimensional coordinates and the descriptors of the feature points in the image on which the key frame is based. The absolute pose indicates the location and attitude. The location is represented by coordinates. For example, when the mobile device moves in a two-dimensional space, as shown in FIG. 6, the absolute pose may be represented by three parameters $(x, y, \theta)$, where $(x, y)$ indicate the location of the mobile device, $\theta$ indicates the attitude of the mobile device. In a three-dimensional space, the location of the mobile device may be represented by $(x, y, z)$ of a Cartesian coordinate system, or $(\alpha, \beta, r)$ of a spherical coordinate system. The attitude of the mobile device may be represented by a facing direction of the mobile device or the camera of the mobile device, which is typically represented by an angle. For example, in the three-dimensional space, the attitude may be represented by $(\varphi, \psi, \theta)$. The three angles are typically referred to as the pitch angle, the roll angle, and the yaw angle. It should be noted that the key frame does not include three-dimensional coordinates of a spatial point corresponding to the feature point. Specifically, not only the three-dimensional coordinates of the spatial point in the global coordinate system are not included, the three-dimensional coordinates of the spatial point in the camera coordinate system are also not included.

The above two-dimensional coordinates refer to the two-dimensional coordinates of the feature point in the pixel coordinate system.

Absolute pose of the mobile device: i.e., the absolute pose of the mobile device in the global coordinate system, refers to the location and attitude of the mobile device in the global coordinate system.

Absolute pose of a node: data of the node stored in a controller, the value of which is consistent with the absolute pose of the mobile device when the node is created.

Original pose: obtained through data provided by the dead reckoning sensor. For example, the dead reckoning sensor may directly provide an original pose, or, the dead reckoning sensor may provide motion data, and the controller calculates the original pose based on the motion data. The original pose is also an absolute amount, which is different from a relative amount, and can be understood as an absolute pose of the mobile device prior to an optimization. It should be noted that unless specifically noted in the present invention, the dead reckoning sensor directly providing the original pose is used as an example in the explanation.

Global coordinate system: a coordinate system fixed in the environment.

Dead reckoning based relative pose: a relative amount, provided by the dead reckoning sensor, between an absolute pose of the mobile device at a first time instance and an absolute pose of the mobile device at a second time instance.

Visual relative pose: a relative amount between an absolute pose of the mobile device at a first time instance and an absolute pose of the mobile device at a second time instance, obtained based on a current image captured by the visual sensor and a key frame from the key frame database that is successfully matched with the current image. The visual relative pose is obtained from computation based on two-dimensional coordinates of feature points that match with one another between the successfully matched image and the key frame. The visual relative pose relates to the visual sensor and not the dead reckoning sensor.

The above-described absolute pose at the first time instance refers to the absolute pose of the mobile device when the current image is acquired by the visual sensor, and the absolute pose at the second time instance refers to the absolute pose included in the key frame that matches with the current image.

Each of the above-described relative amounts in the dead reckoning based relative pose and the visual relative pose includes a relative amount in the location and a relative amount in the attitude.

It should be noted that in the present invention, the relative amount in the attitude of the visual relative pose and the relative amount in the attitude of the dead reckoning based relative pose have the same form, whereas the relative amount in the location of the visual relative pose and the relative amount in the location of the dead reckoning based relative pose have different forms. In the present invention, the dimension of the relative amount in the location of the visual relative pose is one dimension less than the dimension of the relative amount in the location of the dead reckoning based relative pose.

For example, in the example shown in FIG. 6 where the mobile device moves in a two-dimensional space, in a typical manner, the dead reckoning based relative pose is represented by $(\Delta x, \Delta y, \Delta\theta)$. In the present invention, the visual relative pose is represented by $(\Delta\alpha, \Delta\theta)$, where $\Delta\alpha = \arcsin\left(\Delta y / \sqrt{(\Delta x^2 + \Delta y^2)}\right)$.

It should be noted, that in practical computation of the present invention, $\Delta x$, $\Delta y$ need not be computed. Rather, $(\Delta\alpha, \Delta\theta)$ is directly computed. The detailed computation method can refer to latter descriptions. In contrast, in the dead reckoning based relative pose, $(\Delta x, \Delta y, \Delta\theta)$ need to be computed. Similarly, when the mobile device moves in a three-dimensional space, the visual relative pose of the present invention is represented by 5 parameter values $(\Delta\alpha, \Delta\beta, \Delta\phi, \Delta\psi, \Delta\theta)$, whereas the dead reckoning based relative pose is represented by 6 parameter values $(\Delta\alpha, \Delta\beta, \Delta r, \Delta\phi, \Delta\psi, \Delta\theta)$. From the above comparison, it can be seen that the relative amount in the location of the visual relative pose has one dimension less than the relative amount in the location of the dead reckoning based relative pose.

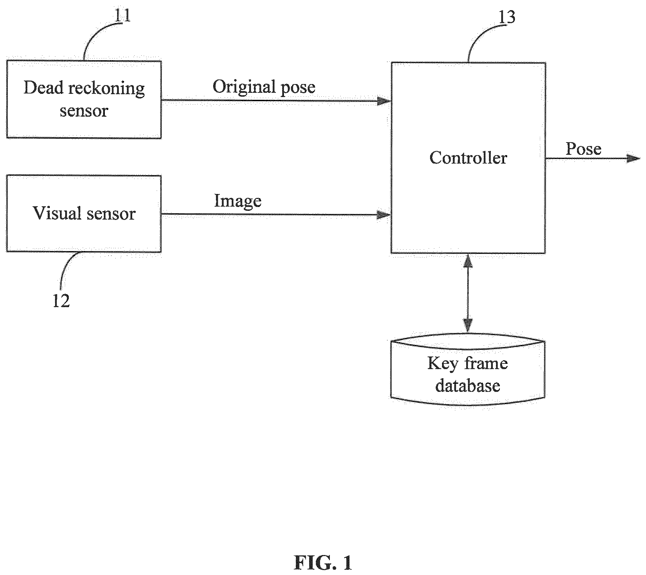

FIG. 1 is a schematic diagram of a structure of a VSLAM system, according to an exemplary embodiment.

As shown in FIG. 1, the system includes: a dead reckoning sensor 11, a visual sensor 12 and a controller 13. The dead reckoning sensor 11 is configured to generate an original pose or generate motion data for computing the original pose. The visual sensor 12 includes a video camera, an infrared imaging device, etc., configured to acquire images. The controller 13 is configured for localization and/or mapping based on the original pose and images transmitted from the visual sensor. It is understood that the pose output by the controller 13 refers to an updated absolute pose of the mobile device.

The VSLAM system may be specifically implemented in mobile devices, such as the technical field of movable robots. Thus, the system may be a component of the mobile device.

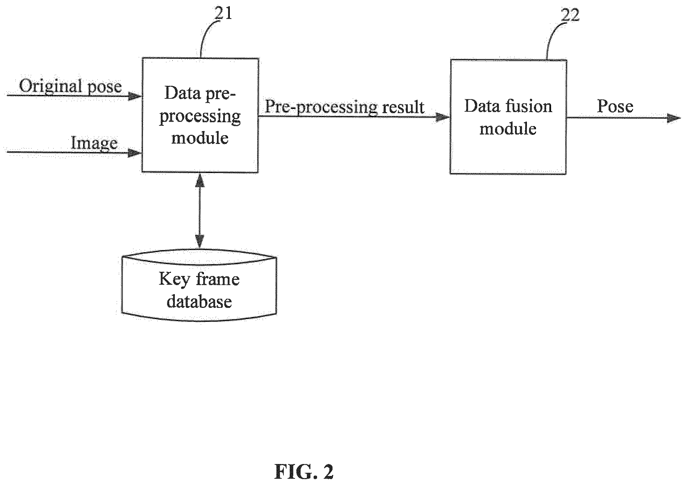

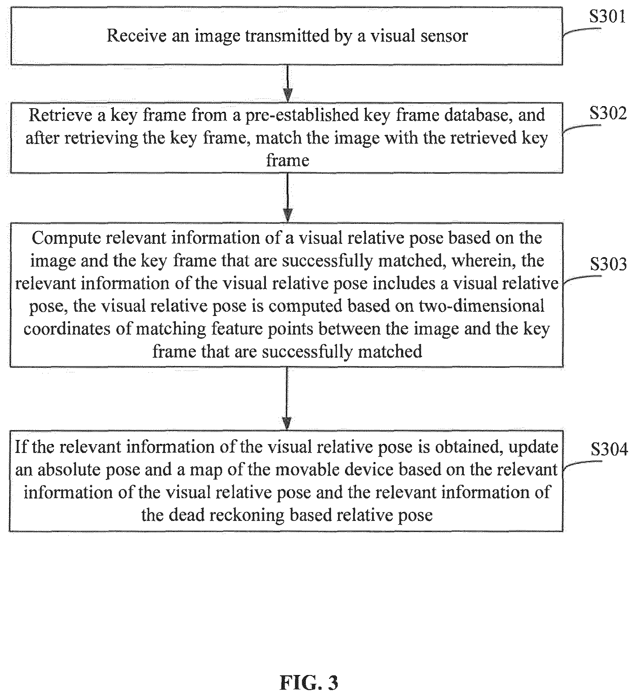

The controller 13 may be a hardware component, a software component, a firmware component, or a combination thereof. Examples of the detailed configuration of the controller 13 can refer to FIG. 2 and FIG. 3.

The motion data generated by the dead reckoning sensor include displacement data, velocity data, , acceleration data, angle data of the mobile device, etc. The controller may compute the original pose based on the motion data generated by the dead reckoning sensor, or, the dead reckoning sensor may itself compute the original pose based on the motion data, and provide the original pose to the controller. Unless otherwise specifically noted, the present invention uses the dead reckoning sensor providing the original pose to the controller as an example.

Due to the limitation on the performance of the dead reckoning sensor, the motion data pose generated by the dead reckoning sensor or the original pose has accumulated errors. To obtain more accurate localization and mapping results, the original pose needs to be corrected. In the embodiments of the present invention, the correction is based on the image acquired by the visual sensor.

The visual sensor may image the surrounding environment based on an acquisition period set by the controller to obtain images. The images acquired by the visual sensor and the original pose acquired by the dead reckoning sensor are transmitted into the controller. The controller corrects the original pose acquired by the dead reckoning sensor based on the images acquired by the visual sensor, and further performs localization and mapping.

In this embodiment, the correction of the original pose based on the images acquired by the visual sensor realizes the localization and mapping. In addition, when implemented in a mobile device, VSLAM of the mobile device is realized.

FIG. 2 is a schematic diagram of a structure of a controller according to an exemplary embodiment.

As shown in FIG. 2, the controller may be divided into a data pre-processing module 21 and a data fusion module 22.

The data pre-processing module 21 receives the original pose from the dead reckoning sensor, and, receives images from the visual sensor, and after processing these data, obtains a dead reckoning based relative pose, a visual relative pose, a new key frame identification, a node identification relevant information to form a pre-processing result. The node identification includes: a new node identification and/or an associated node identification. The data fusion module 22 performs localization and mapping based on the pre-processing result. It should be understood that the dead reckoning based relative pose and its relevant information may also be computed by the data fusion module 22. At this moment, the data pre-processing module provides the original pose to the data fusion module. The data pre-processing module does not perform computation of the dead reckoning based relative pose and its relevant information. Instead, the data fusion module performs the computation.

The data fusion module may record an absolute pose of each node, and after optimizing the absolute pose of the node based on the visual relative pose, use the optimized absolute pose of a current node as a current localization result, to accomplish localization. The node includes a key frame node and a pose node. Optimized absolute pose of a key frame node that is recorded at the back end can be understood as map information, thereby accomplishing mapping.

The key frame database is configured to store key frames. Depending on different current situations, the number of key frames stored in the key frame database may be 0, 1, or multiple. The key frame is created based on an image acquired by the visual sensor. The detailed content of the key frame may refer to the above explanation of the terminologies.

FIG. 3 is a flow chart illustrating a VSLAM method according to an exemplary embodiment. This localization method may be executed by the controller.

As shown in FIG. 3, the VSLAM method includes:

S301: receiving an image transmitted by a visual sensor.

S302: retrieving a key frame from a pre-established key frame database, and, after retrieving the key frame, matching the image with the retrieved key frame.

S303: computing relevant information of a visual relative pose based on the image and the key frame that are successfully matched, wherein, the relevant information of the visual relative pose includes a visual relative pose, the visual relative pose is computed based on two-dimensional coordinates of matching feature points between the image and the key frame that are successfully matched.

S304: if the relevant information of the visual relative pose is obtained, updating an absolute pose and a map of the mobile device based on the relevant information of the visual relative pose and the relevant information of the dead reckoning based relative pose.

On the other hand, if the relevant information of the visual relative pose cannot be obtained, then the absolute pose of the mobile device at the most recent time instance is updated based on the relevant information of the dead reckoning based relative pose.

In addition, it can be understood, that the method further includes:

receiving an original pose transmitted by the dead reckoning sensor; or receiving motion data transmitted by the dead reckoning sensor, and computing the original pose based on the motion data; and computing the relevant information of the dead reckoning based relative pose based on the original pose.

It can be understood that there is no time sequence limiting relationship between the above steps, so long as parameters needed for current computation have been received and/or computed prior to the current computation.

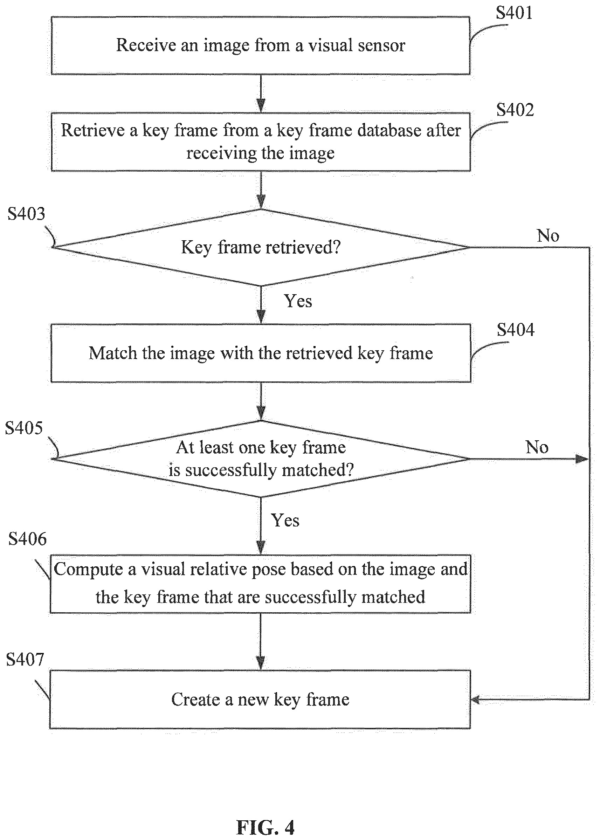

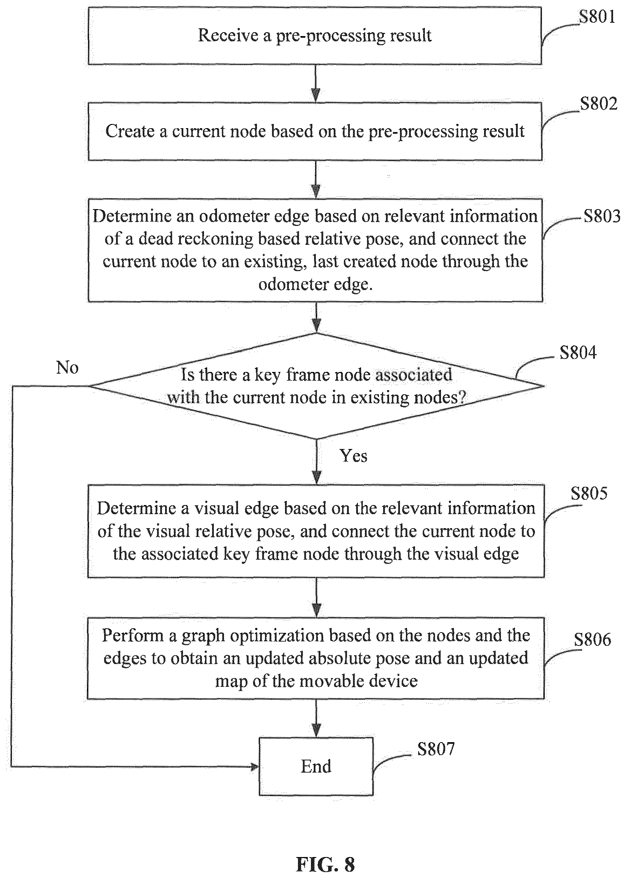

In a specific implementation, matching the image and the key frame, and computing the visual relative pose and may be executed by the data pre-processing module of the controller. Updating the absolute pose and/or the map of the mobile device based on the pre-processing result may be executed by the data fusion module of the controller. Among these, the detailed processing flow of the data pre-processing can refer to FIG. 4, and the detailed processing flow of the data fusion can refer to FIG. 8.

In this embodiment, when computing the visual relative pose, by adopting two-dimensional coordinates of the feature points that match with one another, rather than the three-dimensional coordinates of the spatial points corresponding to the feature points, various limitations associated with computing the three-dimensional coordinates may be avoided, thereby increasing the success rate of computing the visual relative pose, and further improving the accuracy of the ultimate localization and mapping result and computing speed.

Because the data pre-processing module is primarily configured to process vision information, operations involving the dead reckoning based relative pose and its relevant information are relatively simple, which are not repeated, and a suitable method adopted in relevant technology can be implemented. In addition, the dead reckoning based relative pose and its relevant information may be obtained by the data fusion module based on the original pose.

FIG. 4 is a flow chart illustrating processes for data pre-processing according to an embodiment.

As shown in FIG. 4, the processes of the data pre-processing include:

S401: receiving an image from a visual sensor.

S402: retrieving a key frame from a key frame database after receiving the image.

Here, the key frame database is configured to store key frames. At a current time instance, the key frame database may include a key frame, or may be empty.

S403: determining whether the key frame can be retrieved. If Yes, S404 is executed; otherwise, S407 is executed.

S404: matching the image with the retrieved key frame.

Here, image data of the key frame include information of feature points of the key frame.

During the matching, feature points of the image may be extracted to obtain information of the feature points of the image. Then, the matching may be performed based on the information of the feature points of the image and the information of the feature points of the key frame. When the number of feature points that are matched with one another is greater than or equal to a matching threshold value, then it is determined that the image and the key frame have been successfully matched. Here, the matching threshold value is a predetermined threshold value.

The information of a feature point includes: two-dimensional coordinates of the feature point in the pixel coordinate system and a descriptor of the feature point.

Various relevant technologies may be used to realize the extraction of the feature points, for example, a Scale-invariant Feature Transform ("SIFT") algorithm, a Speeded Up Robust Features ("SURF") algorithm, an Oriented FAST and Rotated BRIEF ("ORB") algorithm, etc.

After the information of the feature points of the image and the information of the feature points of the key frame are obtained, feature points matching computation is performed. The feature points matching computation may be realized using various relevant technologies. For example, a search scope is determined based on the original pose corresponding to the image and the two-dimensional coordinates of the feature points, a vector distance is calculated based on the descriptors within the search scope, and matching feature points are determined based on the vector distance.

S405: determining whether there is at least one key frame that is successfully matched. If Yes, S406 is executed; otherwise, S407 is executed.

Here, a different key frame may be retrieved from the key frame database each time, to match with the image, until matching with the image has been performed for all of the key frames stored in the key frame database, thereby determining whether there is at least one key frame that is successfully matched with the image.

S406: computing a visual relative pose based on the image and the key frame that are successfully matched.

Here, the visual relative pose may be computed based on two-dimensional coordinates of the matching feature points included in the image and the key frames that have been successfully matched.

Based on a predetermined reasonableness condition, the visual relative pose may be reasonable or not reasonable. Specifically, when the visual relative pose is reasonable, a covariance matrix of the visual relative pose and two node identifications associated with the visual relative pose are also obtained. Therefore, when the visual relative pose is reasonable, the visual relative pose and its covariance matrix, and the current node identification and an associated node identification are treated as relevant information of the visual relative pose, and are put into the pre-processing results. When all of the visual relative poses obtained through computation are not reasonable, the pre-processing results do not include the relevant information of the visual relative pose.

The above-described two node identifications include a current node identification and an associated node identification. Here, an identification of an image and an identification of a key frame corresponding to the visual relative pose are used as the current node identification and the associated node identification, respectively. A covariance matrix image may be pre-configured with an image identification. Because the key frame is created based on an image, therefore, the key frame may be the same as the image identification of the image based on which the key frame is created. Accordingly, the above-described current node identification may be selected to be the image identification of the current image. The above-described associated node identification may specifically be the image identification of the key frame that is successfully matched with the image and from which a reasonable visual relative pose can be computed. For example, an image of a first identification and a key frame of a second identification are matched successfully and from which a reasonable visual relative pose can be computed, then the current node identification is the first identification, and the associated node identification is the second identification.

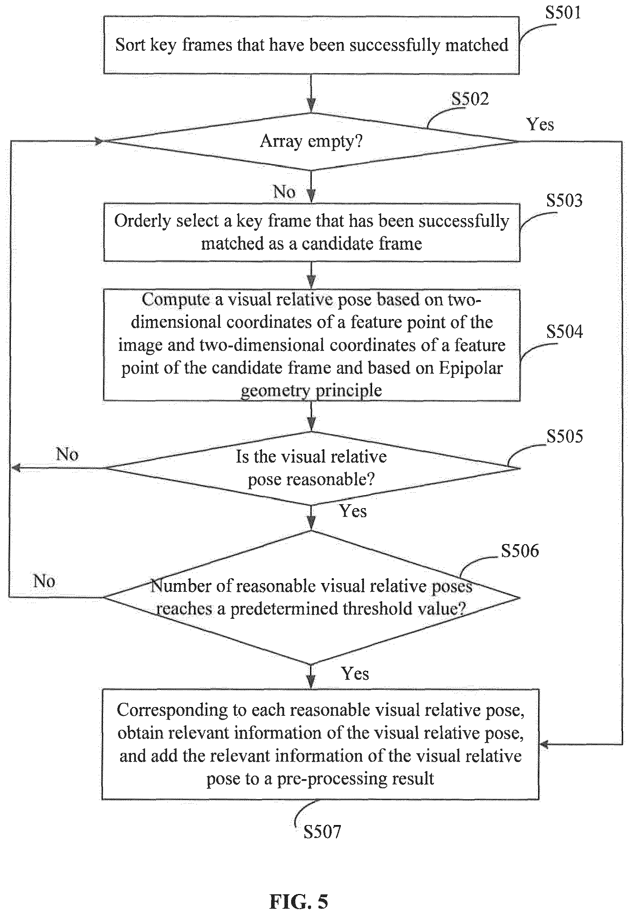

The detailed content of the computation of the visual relative pose based on the image and the key frame may refer to FIG. 5.

S407: creating a new key frame.

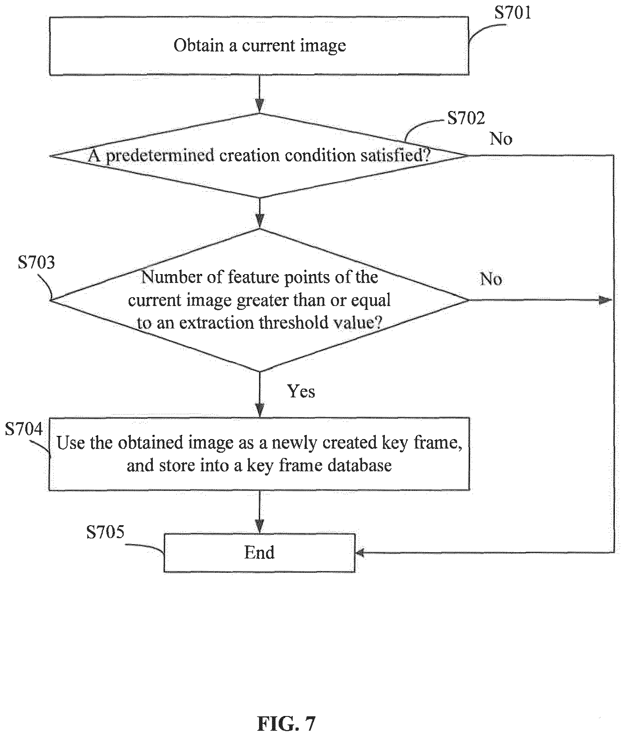

The detailed process for creating the key frame can refer to FIG. 7.

In this embodiment, by performing the computation of the visual relative pose and the dead reckoning based relative pose at the data pre-processing module, can provide to the data fusion module for localization and/or mapping. By using two-dimensional coordinates when computing the visual relative pose, issues associated with computing three-dimensional coordinates can be avoided, thereby obtaining constraint information provided by the vision in a convenient, accurate, and fast manner.

FIG. 5 is a flow chart illustrating processes for computing the visual relative pose according to an embodiment.

As shown in FIG. 5, the processes for computing the visual relative pose include:

S501: sorting key frames that have been successfully matched.

Here, the key frames that have been successfully matched may be sorted based on a similarity between the key frames and the image that have been successfully matched.

The similarity may be computed based on the BoW algorithm.

For example, first, a bag of words is trained. An image feature vector of the image and an image feature vector of the key frame are generated based on the trained bag of words. A distance between the image feature vector of the image and the image feature vector of the key frame is computed. The smaller the distance, the higher the similarity. Then, when sorting the key frames, the order can be based on the distance from small to large.

Here, when training the bag of words, a large amount of pre-collected descriptors of feature points may be clustered into a fixed number of clusters. Each cluster is referred to as a word. The inverse document frequency (IDF) of the word is computed based on a statistical method, and is used as the weight of the word. The bag of words is formed by the words and their corresponding weights. When generating an image feature vector based on the bag of words, a length of the vector is a quantity of the words of the bag of words. Each element in the vector is the term frequency-inverse document frequency (TF-IDF) of the word corresponding to the position of the element in the current image.

S502: determining whether an array is empty. If it is empty, S507 is executed; otherwise, S503 is executed.

Here, the array is configured to store the sorted key frames that have been successfully matched. When a key frame is to be retrieved from the array, an order based on the similarity from large to small is used to retrieve the key frame that has been successfully matched. Then, the corresponding key frame no longer exists in the array.

S503: orderly selecting a key frame that has been successfully matched as a candidate frame.

S504: computing a visual relative pose based on two-dimensional coordinates of a feature point of the image and two-dimensional coordinates of a feature point of the candidate frame and based on Epipolar geometry principle.

For example, based on two-dimensional coordinates of feature points that match with one another, a basic matrix is computed based on a seven-point method or an eight-point method of Epipolar geometry. Under the condition of the internal parameters of the video camera being known, the basic matrix may be decomposed through a matrix decomposition method, to obtain the visual relative pose. Alternatively, if an essential matrix is obtained based on a five-point method, then the internal parameters of the video camera need not be known. The essential matrix is decomposed to obtain the visual relative pose.

For example, as shown in FIG. 6, when a mobile device 61 carrying a camera 62, such as a cleaning robot, moves in a two-dimensional plane (XOY), the pose of the mobile device may be represented by (x, y, $\theta$). Then the visual relative pose to be computed may be represented by ($\Delta\alpha, \Delta\theta$), wherein, $\Delta\alpha = \arcsin\left(\Delta y / \sqrt{(\Delta x^2 + \Delta y^2)}\right)$.

Assuming that the two-dimensional coordinates of a group of feature points that match with one another are represented by:

$(u_i, v_i, 1)^T$, $\left(u_i^{'}, v_i^{'}, 1\right)^T$,

then the following equation exists in an ideal situation:

$$\begin{bmatrix} u_i & v_i & 1 \end{bmatrix} K^{-T} \begin{bmatrix} 0 & 0 & \sin\Delta\alpha \\ 0 & 0 & -\cos\Delta\alpha \\ -\sin\Delta\alpha & \cos\Delta\alpha & 0 \end{bmatrix} \begin{bmatrix} \cos\Delta\theta & -\sin\Delta\theta & 0 \\ \sin\Delta\theta & \cos\Delta\theta & 0 \\ 0 & 0 & 1 \end{bmatrix} K^{-1} \begin{bmatrix} u_i^{'} & v_i^{'} & 1 \end{bmatrix} = 0 \tag{1}$$

wherein, K represents an internal parameter matrix of the camera.

For given multiple groups of matching feature points, there are multiple equations (1) corresponding to the multiple groups. The multiple equations are optimized to be as close to 0 as possible. As a result, the visual relative pose ($\Delta\alpha, \Delta\theta$) may be obtained.

The above descriptions use the movement of the mobile device in a two-dimensional space as an example. It can be understood that based on the above computational principles, a visual relative pose when the mobile device moves in a three-dimensional space may also be computed. The pose of the movable device, which may be a movable robot, may be represented by $(x, y, z, \phi, \psi, \theta)$, and the visual relative pose to be computed may be represented by $(\Delta\alpha, \Delta\beta, \Delta\phi, \Delta\psi, \Delta\theta)$,

wherein, $\Delta\alpha = \arcsin\left(\Delta y / \sqrt{(\Delta x^2 + \Delta y^2)}\right)$, and $\Delta\beta = \arcsin\left(\Delta z / \sqrt{(\Delta x^2 + \Delta y^2 + \Delta z^2)}\right)$.

Assuming the two-dimensional coordinates of a group of feature points that match with one another are represented by:

$(u_i, v_i, 1)^T$, $\left(u_i^{'}, v_i^{'}, 1\right)^T$,

then the following equation exists in an ideal situation:

$$\begin{bmatrix} u_i & v_i & 1 \end{bmatrix} K^{-T} \begin{bmatrix} 0 & -\sin\Delta\beta & \cos\Delta\beta\sin\Delta\alpha \\ \sin\Delta\beta & 0 & -\cos\Delta\beta\cos\Delta\alpha \\ -\cos\Delta\beta\sin\Delta\alpha & \cos\Delta\beta\cos\Delta\alpha & 0 \end{bmatrix} R(\Delta\phi, \Delta\psi, \Delta\theta) K^{-1} \begin{bmatrix} u_i^{'} & v_i^{'} & 1 \end{bmatrix} = 0 \tag{2,}$$

$$R(\Delta\phi,\Delta\psi,\Delta\theta)=\begin{bmatrix} \cos\Delta\theta\cos\Delta\psi-\sin\Delta\theta\sin\Delta\phi\sin\Delta\psi & -\sin\Delta\theta\cos\Delta\psi & \cos\Delta\theta\sin\Delta\psi+\sin\Delta\theta\sin\Delta\phi\cos\Delta\psi \\ \sin\Delta\theta\cos\Delta\psi+\cos\Delta\theta\sin\Delta\phi\sin\Delta\psi & \cos\Delta\theta\cos\Delta\phi & \sin\Delta\theta\sin\Delta\psi-\cos\Delta\theta\sin\Delta\phi\cos\Delta\psi \\ -\cos\Delta\phi\sin\Delta\psi & \sin\Delta\phi & \cos\Delta\phi\cos\Delta\psi \end{bmatrix},$$

wherein,

and K represents the internal parameter matrix of the camera.

For given multiple groups of feature points that match with one another, there are multiple equations (2) corresponding to the multiple groups. The multiple equations are optimized to be as close to 0 as possible. As a result, the visual relative pose represented by $(\Delta\alpha,\Delta\beta,\Delta\phi,\Delta\psi,\Delta\theta)$ may be obtained.

Defining:

$$X = (\Delta\alpha,\Delta\beta,\Delta\phi,\Delta\psi,\Delta\theta),$$

$$\Theta_i = \begin{pmatrix} u_i & v_i & u_i' & v_i' \end{pmatrix},$$

then equation (2) may be expressed as:

$$F(X,\Theta) = \sum_i^n \left[ \frac{1}{2}\left(f_i(X,\Theta_i,K)\right)^2 \right],$$

wherein, $\Theta = (K, \Theta_1, \ldots, \Theta_j, \ldots \Theta_n)$, and n is the number of groups of feature points that match with one another.

Based on the variance transfer rule, the covariance matrix of the visual relative pose may be computed based on the following equation:

$$\Sigma(X) = \left(\frac{\partial F^2(X,\Theta)}{\partial X}\right)^{-1}\left(\frac{\partial F^2(X,\Theta)}{\partial X\partial\Theta}\right)^{T}\Sigma(\Theta)\left(\frac{\partial F^2(X,\Theta)}{\partial X\partial\Theta}\right)\left(\frac{\partial F^2(X,\Theta)}{\partial^2 X}\right)^{-T}$$

wherein, $\Sigma(X)$ represents the covariance matrix of the visual relative pose, $\Sigma(\Theta)$ represents an empirical value, which is related to the camera parameter and the sensor noise.

It can be understood that the above-described computation method for computing the covariance matrix is only an illustrative method. Also, approximation computation based on experience can be performed, for example, setting the covariance matrix based on a number of feature points that match with one another. That is, the more the matching feature points, the smaller the value of each element included in the covariance matrix, and vice versa.

There are also multiple computational methods for computing the dead reckoning based relative pose. One of the methods is introduced below:

Assuming a dead reckoning based relative pose is to be computed between time instance t1 and time instance t2, then time instance t1 may be used as a starting point, and time instance t2 may be used as a finishing point. The initial pose at the starting point is set as 0. The dead reckoning based relative pose may be obtained by performing an integration of data of the dead reckoning sensor.

The covariance of the dead reckoning based relative pose may be computed based on the variance transfer rule. The entire computation process can refer to the process function of the Kalman filter.

S505: determining whether the visual relative pose is reasonable; if Yes, S506 is executed; otherwise, S502 and steps following S502 are repeatedly executed.

Here, a reasonableness condition may be pre-configured. When the visual relative pose satisfies the predetermined reasonableness condition, it indicates that the visual relative pose is reasonable; otherwise, it is not reasonable.

The predetermined reasonableness condition includes, for example: a reprojection error of the image computed based on the visual relative pose is smaller than a predetermined error value. Specifically, for example, after the visual relative pose is computed, the visual relative pose is substituted into the above multiple equations (1). If a difference between the overall value of the multiple equations and 0 is smaller than a predetermined threshold value, it indicates that the visual relative pose obtained through computation is reasonable. The above-described overall value is computed based on the multiple equations, for example, based on an average value or other suitable computation method. The predetermined reasonableness condition may be based on the current covariance matrix. For example, if the current covariance matrix indicates that the current visual relative pose is reliable, it means the current visual relative pose is reasonable. The covariance matrix may be determined based on information such as noise of the dead reckoning sensor, an abnormal behavior of the mobile device, such as slippage.

S506: determining whether the number of reasonable visual relative poses reaches a predetermined threshold number. If Yes, S507 is executed; otherwise, S502 and subsequent steps are repeatedly executed.

For example, at the beginning, the initial value of the number of reasonable visual relative poses is set as 0. Whenever a reasonable visual relative pose is computed, the number is increased by 1. When the number is smaller than the predetermined threshold number, it indicates that the predetermined threshold value has not been reached. When the number equals to the predetermined threshold number, it indicates that it has been reached.

S507: for each reasonable visual relative pose, obtaining relevant information of the visual relative pose, and, adding the relevant information of the visual relative pose to a pre-processing result.

The relevant information of the visual relative pose includes: a visual relative pose, a covariance matrix of the visual relative pose, and two node identifications associated with the visual relative pose. The detailed content of the relevant information may refer to the relevant content associated with S406, which is not repeated.

It should be noted that the number of reasonable visual relative poses may be one or multiple, and the pre-processing result may include one or multiple groups of relevant information of visual relative pose. Each group of relevant information corresponds to a reasonable visual relative pose. Each group of relevant information may specifically include a visual relative pose and its covariance matrix, the current node identification and the associated node identification. Further, if there are multiple reasonable visual relative poses, because the multiple reasonable visual relative poses correspond to a same current node identification, each group of relevant information may include the current node identification. Alternatively, each group of relevant information may not include the current node identification. Rather, the multiple groups of relevant information may share the current node identification. For example, if there are two reasonable visual relative poses, the pre-processing result may adopt the following two forms:

Form one: a first visual relative pose, a covariance matrix of the first visual relative pose, a current node identification, a first associated node identification; a second visual relative pose, a covariance matrix of the second visual relative pose, the current node identification, a second associated node identification; or

Form two: a current node identification; a first visual relative pose, a covariance matrix of the first visual relative pose, a first associated node identification; a second visual relative pose, a covariance matrix of the second visual relative pose, a second associated node identification.

When there is no reasonable visual relative pose, the computation of the visual relative pose may be terminated. The pre-processing result does not include relevant information of the visual relative pose. Here, if the data pre-processing module is configured to compute relevant information of the dead reckoning based relative pose, then the pre-processing result includes the relevant information of the dead reckoning based relative pose; otherwise, it includes the original pose.

In this embodiment, by computing the visual relative pose preferably based on the key frame that has a high similarity, the accuracy and efficiency can be improved.

FIG. 7 is a flow chart illustrating processes for creating a key frame according to an embodiment.

As shown in FIG. 7, the processes for creating the key frame may include:

S701: obtaining a current image.

For example, an image currently received from the visual sensor is used as the current image.

S702: determining whether a predetermined creation condition is satisfied; if satisfied, S703 is executed; otherwise, S705 is executed.

The creation condition may be set or configured based on actual needs. For example, a predetermined time difference since the last creation of a key frame may be set. When a time difference since the last creation of a key frame reaches the predetermined time difference, creation of a key frame may be triggered. Alternatively, the triggering condition may be configured based on the original pose obtained by the dead reckoning sensor, when the dead reckoning based relative pose computed based on the original pose is greater than a predetermined threshold value, the creation of the key frame is triggered. Alternatively, the creation of the key frame may be triggered based on the current operation status, such as a turn. Alternatively, the creation of the key frame is triggered based on an overlapping region of two consecutively acquired images, e.g., when a ratio of the overlapping region is smaller than a predetermined value, the key frame creation is triggered.

S703: determining whether the number of feature points of the current image is greater than or equal to an extraction threshold value; if Yes, S704 is executed; otherwise, S705 is executed.

The process for extracting a feature point can refer to the above relevant descriptions, which are not repeated here. Through the feature point extraction, two-dimensional coordinates of the feature point in the pixel coordinate system and a descriptor of the feature point may be obtained.

Here, the extraction threshold value is a predetermined threshold value.

S704: when creation is successful, using the obtained image as a newly created key frame and storing in a key frame database.

In addition, when the creation is successful, the current node identification may be output to the data fusion module. The current node identification may be selected to be an image identification of the newly created key frame. Further, a key frame identification can be included, at this moment, it indicates that the new key frame has been created.

It should be noted that after the feature point is extracted from the image, two-dimensional coordinates and a descriptor of the feature point may be obtained. The key frame stored in the key frame database also includes: an absolute pose of the mobile device in the global coordinate system when the current image is captured. The absolute pose may be computed based on an absolute pose corresponding to a preceding image or key frame, and a dead reckoning based relative pose corresponding to a corresponding time interval. A correspondence relationship in times between images and the original poses may be aligned using the following method: assuming the shooting time of an image is t0, then the original poses at two time instances t1 and t2 that are closest to the time instance t0 are obtained. An interpolation computation is performed on the original pose at time instance t1 and the original pose at time instance t2 to obtain an interpolated original pose. A corresponding dead reckoning based relative pose is computed based on the original pose corresponding to the preceding image or key frame and the original pose corresponding to the current image. An absolute pose of the current image is a sum of an absolute pose corresponding to the preceding image or key frame and the dead reckoning based relative pose. Subsequent optimization and updating can be performed. S705: end.

In this embodiment, by extracting and storing two-dimensional coordinates of the feature point when creating the key frame, there is no need to compute three-dimensional coordinates of a spatial point corresponding to the feature point, thereby avoiding issues caused by computing the three-dimensional coordinates, and increasing the number of the key frames included in the key frame database. Furthermore, the matching success rate between the images and the key frames may be improved, and the effect of the localization and mapping can be improved.

The data fusion can be performed based on a filtering based method or a non-linear optimization based method. The non-linear optimization based method is used as an example. FIG. 8 is a flow chart illustrating processes for data fusion according to an embodiment.

As shown in FIG. 8, the processes performed by the data fusion module include:
S801: receiving a pre-processing result.

Here, if the data pre-processing module is configured to compute the relevant information of the dead reckoning based relative pose, then the pre-processing result always includes: a dead reckoning based relative pose, or a covariance matrix of the dead reckoning based relative pose, wherein the covariance matrix of the dead reckoning based relative pose may be determined based on sensor noise, abnormal behavior of the mobile device, etc.

When there is at least one key frame that is successfully matched, and when a reasonable visual relative pose is computed based on the successfully matched key frame, the pre-processing result includes: a dead reckoning based relative pose, a visual relative pose, a covariance matrix of the dead reckoning relative pose, a covariance matrix of the visual relative pose, and an associated node identification. Further, it also includes a new key frame identification and a new node identification.

When a key frame creation condition is satisfied and a key frame is successfully created, the pre-processing result may include a new key frame identification, and the new key frame identification indicates that the new key frame has been created.
S802: creating a current node based on the pre-processing result.

When the pre-processing result includes the new key frame identification and/or the new node identification, a new node is then created. The new node identification is a determination result of the data pre-processing module determining whether to create a pose node based on a predetermined judging condition. The predetermined judging condition includes: whether a distance, an angle difference, and a time interval between a current original pose and an original pose of a last node (i.e., the existing, last created node) fall within or outside of a corresponding predetermined threshold range.

In addition, when the new key frame identification indicates that the key frame has been successfully created, then the current node that has been created is a key frame node; otherwise, it is a pose node.
S803: determining an odometer edge based on relevant information of a dead reckoning based relative pose, and connecting the current node to an existing, last created node through the odometer edge.

Here, the data fusion module may record an absolute pose of each node. At an initial time instance, the absolute pose may be obtained by adding an absolute pose of a last node and a current dead reckoning based relative pose. After optimization, each node includes a value optimized based on the visual relative pose. That is, after optimization, the data fusion module may record: an optimized absolute pose of each node.

S804: determining whether there is a key frame node associated with a current node in existing nodes; if Yes, S805 is executed; otherwise, S807 is executed.

Here, when the pre-processing result includes relevant information of the visual relative pose, an associated

node identification may be obtained from the relevant information of the visual relative pose. When the existing nodes include a node indicated by the associated node identification, it may be determined that there exists a key frame node associated with the current node, and the associated key frame node is a node indicated by the associated node identification.

S805: determining a visual edge based on the relevant information of the visual relative pose, and connecting the current node to the associated key frame node through the visual edge.
S806: performing a graph optimization based on the nodes and the edges to obtain an updated absolute pose and an updated map of the mobile device.

**[0172]** Algorithms for the graph optimization can adopt, for example, a g2o, ceres, etc. Using g2o as an example, the input includes the relative poses of all nodes, the relative poses between the nodes and their covariance matrices. The output includes an optimized absolute pose of each node, and relative poses between the nodes including the visual relative poses and the dead reckoning based relative poses. Here, the optimized absolute pose of the current node is used as a current localization result, i.e., an updated absolute pose of the mobile device at a current location. The optimized absolute pose of the key frame node may be understood as an updated map result, or, updated absolute poses of the mobile device at various different locations.
S807: end.
**[0173]** Here, if the pre-processing result does not include the relevant information of the visual relative pose, then the graph optimization does not need to be performed. Only when the relevant information of the visual relative pose is included, after a closed loop is formed using one or more visual edges, the graph optimization is performed.
**[0174]** If the pre-processing result only includes the relevant information of the dead reckoning based relative pose, i.e., only includes the dead reckoning based relative pose and its covariance matrix, then an absolute pose of the mobile device at the most recent time instance is updated based on the relevant information of the dead reckoning based relative pose. For example, the absolute pose of the mobile device at the most recent time instance is determined as a sum of an absolute pose of the mobile device at the last time instance and the dead reckoning based relative pose.
**[0175]** In this embodiment, through the creation of the points and edges and the graph optimization, updating of the absolute pose and/or the map may be performed quickly after the data fusion module receives the relevant information of the visual relative pose.
**[0176]** In another embodiment, when the data fusion module performs the processes based on a filtering method, the pre-processing result is filtered, and the absolute pose and the map of the mobile device are updated. Here, if the relevant information of the visual relative pose is obtained, then the pre-processing result includes the relevant information of the visual relative pose and the relevant information of the dead reckoning based relative pose.
**[0177]** Using the Kalman filter as an example, the following manner can be adopted:
**[0178]** It can be known from the above descriptions of the related contents of the above-described embodiments, that when the Kalman filter is used, the recursive equations involved include:

$$\hat{x}_k^- = A\hat{x}_{k-1} + Bu_k$$

$$P_k^- = AP_{k-1}A^T + Q$$

$$K_k = P_k^- H^T (HP_k^- H^T + R)^{-1}$$

$$\hat{x}_k = \hat{x}_k^- + K_k(z_k - H\hat{x}_k^-)$$

$$P_k = (I - K_k H)P_k^-$$

**[0179]** Specifically, during localization of the mobile device, assuming that the current time instance is the k-th time instance, then the absolute pose of the mobile device at the current time instance that is to be solved is represented by the above state vector $\hat{x}_k$. $\hat{x}_k$ is typically a vector formed by N elements. The i-th element is an absolute pose of the mobile device at the (k-N+i)-th time instance. N may be a predetermined number. During the recursive computation, $\hat{x}_{k-1}$ is substituted with an absolute pose of the mobile device prior to updating, $z_k$ is substituted with a visual relative pose, $u_k$ is substituted with a dead reckoning based relative pose, $Q$ is substituted with the covariance matrix of the

dead reckoning based relative pose, and $R$ is substituted with the covariance matrix of the visual relative pose.

Therefore, the absolute pose of the mobile device may also be updated through the filtering method, thereby accomplishing localization and/or mapping.

All of the steps of the disclosed methods do not involve computing three-dimensional coordinates of a spatial point corresponding to the feature point, which can avoid various limitations on the computation of the three-dimensional coordinates in existing technologies, and improve the accuracy of the ultimate localization and mapping results and the computing speed.

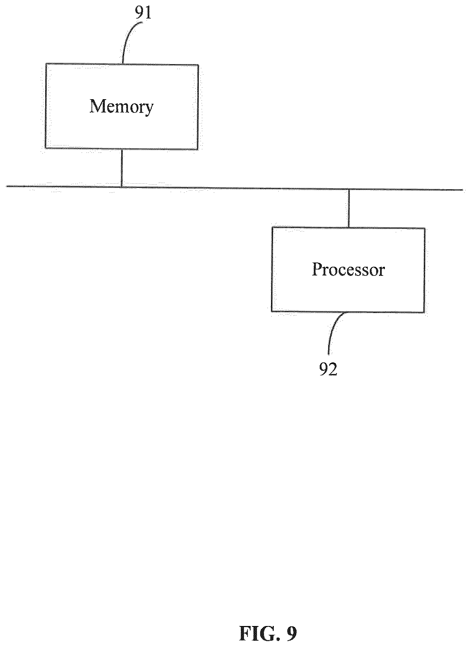

FIG. 9 is a schematic diagram of a structure of a controller according to an embodiment.

As shown in FIG. 9, the controller includes: a memory 91 and a processor 92. The memory 91 is configured to store executable instructions. When the instructions stored in the memory are executed by the processor, the above-disclosed VSLAM method is executed.

Embodiments of the present invention also provide a non-transitory computer-readable storage medium. When the instructions stored in the storage medium are executed by the controller of the mobile device, the above-disclosed VSLAM method is executed.

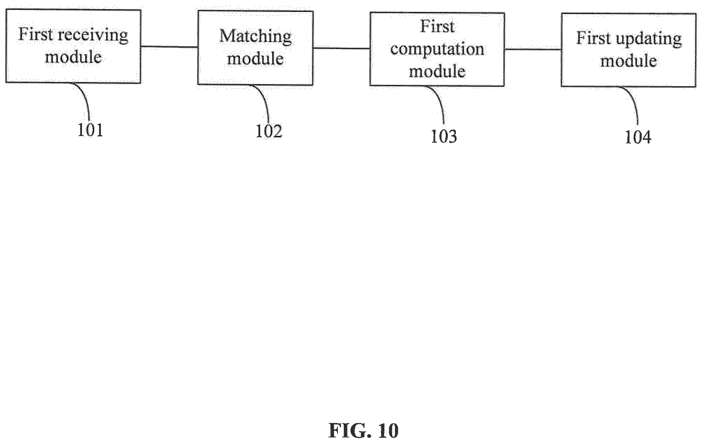

Embodiments of the present invention also provide a VSLAM device. The device may be implemented in the mobile device. As shown in FIG. 10, it includes a first receiving module 101, a matching module 102, a first computation module 103, and a first updating module 104.

The first receiving module 101 is configured to receive an image transmitted by the visual sensor.

The matching module 102 is configured to retrieve a key frame from a pre-established key frame database, and, after retrieving the key frame, to match the image with the retrieved key frame.

The first computation module 103 is configured to compute relevant information of the visual relative pose based on the image and the key frame that have been successfully matched, wherein, the relevant information of the visual relative pose includes the visual relative pose. The visual relative pose is computed based on two-dimensional coordinates of matching feature points between the image and the key frame that have been successfully matched.

The first updating module 104 is configured to, after the relevant information of the visual relative pose is obtained, update an absolute pose and a map of the mobile device based on the relevant information of the visual relative pose and the relevant information of the dead reckoning based relative pose.

Optionally, the key frame includes: an absolute pose. The absolute pose is a pose of the mobile device in a global coordinate system when acquiring an image on which the key frame is based. The map may include an absolute pose of at least one node. The device also includes:

a second updating module configured to update an absolute pose included in a key frame corresponding to a node based on an absolute pose of the node in the updated map.

Optionally, the first computation module is specifically configured to:

sort the key frames that have been successfully matched;
orderly select a key frame that has been successfully matched as a candidate frame;
compute a visual relative pose based on Epipolar geometry principles and based on two-dimensional coordinates of a feature point of an image and two-dimensional coordinates of a feature point of the candidate frame;
determine whether the visual relative pose is reasonable based on a predetermined reasonableness condition; and
repeat selection of a candidate frame and subsequent computations until a cycle is terminated. Terminating the cycle includes: the number of reasonable visual relative poses reaches a predetermined threshold number, or, all of the key frames that have been successfully matched have been selected.

After the cycle is terminated, if there is a reasonable visual relative pose, then the reasonable visual relative pose and its relevant information are added to the pre-processing result. The relevant information includes: a covariance matrix and two associated node identifications.

Optionally, the device also includes:

a creation module configured to extract a feature point from an image to obtain two-dimensional coordinates of the feature point and a descriptor of the feature point, when a predetermined creation condition is satisfied; when the number of extracted feature points is greater than or equal to a predetermined extraction threshold value, create a new key frame, and store the new key frame in the key frame database. The new key frame includes: two-dimensional coordinates and descriptors of the feature points.

Optionally, the key frame also includes: an absolute pose. The absolute pose is a pose of the mobile device in the global coordinate system when capturing an image on which the key frame is based. The device also includes:

an acquisition module configured to compute an absolute pose corresponding to the image based on an absolute pose of a preceding image or key frame, and a dead reckoning based relative pose corresponding to a corresponding time interval.

Optionally, the device also includes:

a second receiving module configured to receive an original pose transmitted by the dead reckoning sensor; or, to receive motion data transmitted by the dead reckoning sensor, and to compute the original pose based on the motion data;

a second computation module configured to compute the relevant information of the dead reckoning based relative pose based on the original pose.

Optionally, the first updating module is specifically configured to:

create a current node after the relevant information of the visual relative pose is obtained;

determine an odometer edge based on the relevant information of the dead reckoning based relative pose, and connect the current node to an existing, last created node through the odometer edge;

when there is a key frame associated with the current node in the existing nodes, determine a visual edge based on relevant information of the visual relative pose, and connect the current node to an associated key frame node through the visual edge; and, perform a graph optimization on the nodes and edges to obtain an updated absolute pose and map of the mobile device.

Optionally, the device also includes:

a third updating module configured to update an absolute pose of the mobile device at a most recent time instance based on the relevant information of the dead reckoning based relative pose when the relevant information of the visual relative pose cannot be obtained.

Optionally, the two-dimensional coordinates are two-dimensional coordinates of a feature point in a pixel coordinate system.

Optionally, the first updating module is specifically configured to: perform a filtering on the relevant information of the visual relative pose and the relevant information of the dead reckoning based relative pose, and update an absolute pose and a map of the mobile device.

Regarding the device of the above embodiments, the detailed manner in which each module performs the operations has already been described in the embodiments of the related methods, which is not described in detail.

It can be understood that descriptions of the same or similar features of the various embodiments can refer to each other. Contents that are not described in detail in some embodiments can refer to the same or similar contents in other embodiments.

It should be noted that in the description of the present invention, the terms "first," "second," etc. are only used for descriptive purposes, and cannot be interpreted as indicating or implying the relative importance. In addition, in the description of the present invention, the term "multiple" means two or more related items, unless noted otherwise.

The processes or methods shown in the flow charts or otherwise described in any manner can be understood as one or more modules, segments, or parts of codes of executable instructions of steps configured to realize specific logic functions or processes. The scope of the preferred embodiments of the present invention includes other implementations. The execution of functions may not follow the illustrated or described order, but may follow an order in which the involved functions are executed in a substantially simultaneous manner or in an opposite order. This should be understood by a person having ordinary skills in the art of embodiments of the present invention.

It should be understood that the various parts of the present invention may be implemented using hardware, software, firmware, or a combination thereof. In the above embodiments, multiple steps or methods may be realized using software or firmware stored in a memory and executable by a suitable instruction-executing system. For example, if implemented using hardware, similar to another embodiment, the realization may be carried out using any of the following technologies known in the art or their combination: a discrete logic circuit of logic gate circuits configured to realize logic functions for digital signals, an application specific integrated circuit having suitable combinations of logic gate circuits, a programmable gate array (PGA), a field programmable gate array (FPGA), etc.

A person having ordinary skills in the art can appreciate that all or parts of the steps included in the method embodiments may be implemented through a program instructing related hardware. The program may be stored in a computer-readable storage medium. When the program is executed, it includes one of the steps of the disclosed methods or their combination.

In addition, various functional units of various embodiments of the present invention may be integrated in a single processing module, or each functional unit may individually and physically exist. In some embodiments, two or more units may be integrated in a single unit. The integrated unit may be realized using hardware, or may be realized using software functional modules. If the integrated module is realized using software functional modules and sold or used as an independent product, it may also be stored in a computer-readable storage medium.

The storage medium mentioned above may be a read-only memory, a magnetic disk, or an optical disk, etc.

In the present description, descriptions of reference terms such as "an embodiment," "some embodiments," "example," "specific example," or "some examples," mean that specific characteristics, structures, materials, or features described in the embodiment or example are included in at least one embodiment or example of the present invention. In the present description, illustrative expression of the above terms does not necessarily mean the same embodiment or example. Further, specific characteristics, structures, materials, or features may be combined in one or multiple embodiments or examples in a suitable manner.

The above illustrates and describes various embodiments of the present invention. It is understood that these embodiments are illustrative, and should not be construed to limit the scope of the present invention. A person having ordinary skills in the art can change, modify, replace, or vary the above embodiments within the scope of the present invention.

**Claims**

1.  A VSLAM method, **characterized in that**, comprising:

    receiving an image transmitted by a visual sensor;
    retrieving a key frame from a pre-established key frame database, and, after the key frame is retrieved, matching the image with the retrieved key frame;
    computing relevant information of a visual relative pose based on the image and the key frame that have been successfully matched, wherein, the relevant information of the visual relative pose includes a visual relative pose, the visual relative pose is computed based on two-dimensional coordinates of matching feature points between the image and the key frame that have been successfully matched; and
    updating an absolute pose and a map of a mobile device based on the relevant information of the visual relative pose and relevant information of a dead reckoning based relative pose, if the relevant information of the visual relative pose is obtained.

2.  The method of claim 1, **characterized in that**, the key frame comprises: the absolute pose, wherein the absolute pose is a pose of the mobile device in a global coordinate system when acquiring an image on which the key frame is based, wherein the map includes the absolute pose of at least one node, and wherein the method further comprises: based on the absolute pose of the node in the updated map, updating the absolute pose included in the key frame corresponding to the node.

3.  The method of claim 1, **characterized in that**, computing the relevant information of the visual relative pose based on the image and the key frame that have been successfully matched comprises:

    sorting key frames that have been successfully matched;
    orderly selecting a key frame that has been successfully matched as a candidate frame;
    computing the visual relative pose based on the two-dimensional coordinates of the feature points of the image and the two-dimensional coordinates of the feature points of the candidate frame, and based on Epipolar geometry principle;
    determining whether the visual relative pose is reasonable based on a predetermined reasonableness condition;
    repeating selection of the candidate frame and subsequent computation, until a cycle is terminated, wherein termination of the cycle includes: a number of reasonable visual relative poses reaches a predetermined threshold number, or, all key frames that have been successfully matched have been selected;
    after the cycle is terminated, if there is a reasonable visual relative pose, forming the relevant information of the visual relative pose based on the reasonable visual relative pose and relevant information of the reasonable visual relative pose, wherein the relevant information comprises: a covariance matrix and two associated node identifications.

4.  The method of claim 1, **characterized in that**, further comprising:

    when a predetermined creation condition is satisfied, extracting feature points from the image, and obtaining two-dimensional coordinates and descriptors of the extracted feature points;
    when a number of the extracted feature points is greater than or equal to a predetermined extraction threshold value, creating a new key frame, and storing the new key frame in the key frame database, wherein the new key frame comprises: the two-dimensional coordinates and the descriptors of the extracted feature points.

5.  The method of claim 4, **characterized in that**, the key frame also comprises: the absolute pose, wherein the absolute pose is a pose of the mobile device in a global coordinate system when acquiring an image on which the key frame is based, and wherein the method further comprises:
computing an absolute pose corresponding to the image based on an absolute pose corresponding to a preceding image or key frame and the dead reckoning based relative pose corresponding to a corresponding time interval.

6. The method of claim 1, **characterized in that**, further comprising:

   receiving an original pose transmitted by a dead reckoning sensor; or, receiving motion data transmitted by the dead reckoning sensor, and computing the original pose based on the motion data;
   computing the relevant information of the dead reckoning based relative pose based on the original pose.

7. The method of claim 1, **characterized in that**, updating the absolute pose and the map of the mobile device based on the relevant information of the visual relative pose and the relevant information of the dead reckoning based relative pose, comprises:

   creating a current node after the relevant information of the visual relative pose is obtained;
   determining an odometer edge based on the relevant information of the dead reckoning based relative pose, and connecting the current node to an existing, last created node through the odometer edge;
   when there is a key frame node associated with the current node in existing nodes, determining a visual edge based on the relevant information of the visual relative pose, connecting the current node to the associated key frame node through the visual edge; and, performing a graph optimization on the nodes and edges to obtain an updated absolute pose and an updated map of the mobile device.

8. The method of any of claims 1-7, **characterized in that**, further comprising:
   updating the absolute pose of the mobile device at a most recent time instance based on the relevant information of the dead reckoning based relative pose, if the relevant information of the visual relative pose is not obtained.

9. A controller, **characterized in that**, comprising:

   a processor; and
   a memory configured to store instructions executable by the processor,
   wherein, when the instructions stored in the storage memory are executed by the processor, the method of any of claims 1-8 is executed.

10. A mobile device, **characterized in that**, comprising:

    a dead reckoning sensor configured to compute an original pose or motion data, to directly obtain the original pose or to obtain the original pose based on computation using the motion data;
    a visual sensor configured to acquire an image;
    a controller connected with the dead reckoning sensor and the visual sensor, and configured to execute the method of any of claims 1-8.

**FIG. 1**

FIG. 2

EP 3 919 863 A1

| Receive an image transmitted by a visual sensor | S301 |

| Retrieve a key frame from a pre-established key frame database, and after retrieving the key frame, match the image with the retrieved key frame | S302 |

| Compute relevant information of a visual relative pose based on the image and the key frame that are successfully matched, wherein, the relevant information of the visual relative pose includes a visual relative pose, the visual relative pose is computed based on two-dimensional coordinates of matching feature points between the image and the key frame that are successfully matched | S303 |

| If the relevant information of the visual relative pose is obtained, update an absolute pose and a map of the movable device based on the relevant information of the visual relative pose and the relevant information of the dead reckoning based relative pose | S304 |

**FIG. 3**

S401

Receive an image from a visual sensor

S402

Retrieve a key frame from a key frame database after receiving the image

S403

Key frame retrieved? — No

Yes

S404

Match the image with the retrieved key frame

S405

At least one key frame is successfully matched? — No

Yes

S406

Compute a visual relative pose based on the image and the key frame that are successfully matched

S407

Create a new key frame

**FIG. 4**

Sort key frames that have been successfully matched — S501

Array empty? — S502 → Yes

No ↓

Orderly select a key frame that has been successfully matched as a candidate frame — S503

Compute a visual relative pose based on two-dimensional coordinates of a feature point of the image and two-dimensional coordinates of a feature point of the candidate frame and based on Epipolar geometry principle — S504

Is the visual relative pose reasonable? — S505

No ←

Yes ↓

Number of reasonable visual relative poses reaches a predetermined threshold value? — S506

No

Yes ↓

Corresponding to each reasonable visual relative pose, obtain relevant information of the visual relative pose, and add the relevant information of the visual relative pose to a pre-processing result

S507

**FIG. 5**

**FIG. 6**

S701

Obtain a current image

S702

No

A predetermined creation condition satisfied?

S703

Number of feature points of the current image greater than or equal to an extraction threshold value?

No

Yes

S704

Use the obtained image as a newly created key frame, and store into a key frame database

S705

End

**FIG. 7**

```
┌─────────────────────────────────────────────────────────┐
│           Receive a pre-processing result                │  S801
└─────────────────────────────────────────────────────────┘
                          │
                          ▼
┌─────────────────────────────────────────────────────────┐
│    Create a current node based on the pre-processing     │  S802
│                       result                             │
└─────────────────────────────────────────────────────────┘
                          │
                          ▼
┌─────────────────────────────────────────────────────────┐
│ Determine an odometer edge based on relevant information │  S803
│   of a dead reckoning based relative pose, and connect   │
│  the current node to an existing, last created node      │
│           through the odometer edge.                     │
└─────────────────────────────────────────────────────────┘
                          │
                          ▼
      No        ◇ Is there a key frame node associated ◇     S804
    ◀───────────  with the current node in existing nodes?
                          │ Yes
                          ▼
┌─────────────────────────────────────────────────────────┐
│  Determine a visual edge based on the relevant           │  S805
│  information of the visual relative pose, and connect     │
│  the current node to the associated key frame node       │
│             through the visual edge                      │
└─────────────────────────────────────────────────────────┘
                          │
                          ▼
┌─────────────────────────────────────────────────────────┐
│  Perform a graph optimization based on the nodes and     │  S806
│  the edges to obtain an updated absolute pose and an     │
│      updated map of the movable device                   │
└─────────────────────────────────────────────────────────┘
                          │
                          ▼
                   ┌──────────────┐
                   │     End      │   S807
                   └──────────────┘
```

**FIG. 8**

91

Memory

Processor

92

**FIG. 9**

```
┌──────────────┐   ┌──────────────┐   ┌──────────────┐   ┌──────────────┐
│ First receiving│   │   Matching   │   │    First     │   │ First updating│
│    module    │───│    module    │───│ computation  │───│    module    │
│              │   │              │   │   module     │   │              │
└──────────────┘   └──────────────┘   └──────────────┘   └──────────────┘
       101               102               103                104
```

**FIG. 10**

## INTERNATIONAL SEARCH REPORT

| International application No. |
| --- |
| **PCT/CN2019/102686** |

**A.  CLASSIFICATION OF SUBJECT MATTER**

G01C 21/20(2006.01)i

According to International Patent Classification (IPC) or to both national classification and IPC

**B.  FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, EPODOC, WPI, CNKI: 同步定位与建图, 视觉, 图像, 位姿, 帧, 二维, 三维, 地图, VSLAM, VISUAL 2D SLAM, KEY 3D FRAME, VISION, IMAGE

**C.  DOCUMENTS CONSIDERED TO BE RELEVANT**

| Category* | Citation of document, with indication, where appropriate, of the relevant passages | Relevant to claim No. |
| --- | --- | --- |
| X | CN 107677279 A (SHANGHAI SLAMTEC CO., LTD.) 09 February 2018 (2018-02-09) claims 1-10, description, paragraphs [0047]-[0068], and figures 1 and 2 | 1-10 |
| A | CN 108803591 A (BEIJING MIWEN POWER TECH CO., LTD.) 13 November 2018 (2018-11-13) entire document | 1-10 |
| A | CN 106959691 A (LENOVO (BEIJING) LIMITED) 18 July 2017 (2017-07-18) entire document | 1-10 |
| A | CN 108873908 A (CHONGQING UNIVERSITY) 23 November 2018 (2018-11-23) entire document | 1-10 |
| A | CN 107193279 A (FUDAN UNIVERSITY) 22 September 2017 (2017-09-22) entire document | 1-10 |
| A | CN 108062537 A (HIPPO INFORMATION TECH SHENZHEN CO., LTD.) 22 May 2018 (2018-05-22) entire document | 1-10 |
| A | CN 108629829 A (CHINA GERMANY ZHUHAI ARTIFICIAL INTELLIGENCE INSITUTE CO., LTD. et al.) 09 October 2018 (2018-10-09) entire document | 1-10 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 November 2019** | **28 November 2019** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

EP 3 919 863 A1

## INTERNATIONAL SEARCH REPORT

International application No.

**PCT/CN2019/102686**

### C. DOCUMENTS CONSIDERED TO BE RELEVANT

| Category* | Citation of document, with indication, where appropriate, of the relevant passages | Relevant to claim No. |
|---|---|---|
| A | CN 108648274 A (SOUTH CHINA UNIVERSITY OF TECHNOLOGY) 12 October 2018 (2018-10-12)<br>entire document | 1-10 |
| A | US 2018211399 A1 (SAMSUNG ELECTRONICS CO., LTD.) 26 July 2018 (2018-07-26)<br>entire document | 1-10 |

Form PCT/ISA/210 (second sheet) (January 2015)

34

# EP 3 919 863 A1

**INTERNATIONAL SEARCH REPORT**
Information on patent family members

International application No.

**PCT/CN2019/102686**

| Patent document cited in search report | | | Publication date (day/month/year) | Patent family member(s) | | | Publication date (day/month/year) |
|---|---|---|---|---|---|---|---|
| CN | 107677279 | A | 09 February 2018 | WO | 2019062651 | A1 | 04 April 2019 |
| CN | 108803591 | A | 13 November 2018 | None | | | |
| CN | 106959691 | A | 18 July 2017 | None | | | |
| CN | 108873908 | A | 23 November 2018 | None | | | |
| CN | 107193279 | A | 22 September 2017 | None | | | |
| CN | 108062537 | A | 22 May 2018 | None | | | |
| CN | 108629829 | A | 09 October 2018 | CN | 108629829 | B | 15 February 2019 |
| CN | 108648274 | A | 12 October 2018 | None | | | |
| US | 2018211399 | A1 | 26 July 2018 | KR | 20180087947 | A | 03 August 2018 |
| | | | | US | 10217234 | B2 | 26 February 2019 |

Form PCT/ISA/210 (patent family annex) (January 2015)